Europäisches Patentamt

**European Patent Office**

Office européen des brevets

(19)

(11) Publication number: **0 098 248**
A2

(12)     EUROPEAN PATENT APPLICATION

(21) Application number: **83830127.3**

(22) Date of filing: **23.06.83**

(51) Int. Cl.³: **B 65 G 53/12**
**B 65 G 53/36**

(30) Priority: **23.06.82 IT 944882**

(43) Date of publication of application:
**11.01.84 Bulletin 84/2**

(84) Designated Contracting States:
**AT BE CH DE FR GB LI LU NL SE**

(71) Applicant: **MENCI S.p.A.**
**Fraz. Montecchio, 353**
**I-52043 Castiglion Fiorentino (Arezzo)(IT)**

(72) Inventor: **Menci, Santi**
**Fraz. Montecchio, 356**
**Castiglion Fiorentino (Arezzo)(IT)**

(74) Representative: **Bardini, Marco Luigi et al,**
**c/o Società Italiana Brevetti S.p.A. Corso dei Tintori 25**
**I-50122 Firenze(IT)**

(54) **Pneumatic device for unloading pulverulent or granular materials from containers.**

(57) A pneumatic device for unloading pulverulent or granular material from a fixed of mobile container comprises a compressed air generator, an air feed conduit from said generator to the bottom of said container and a valved outlet conduit for discharging the material. A plurality of radial conduits (16) fixed at the bottom of said container and a compressed air distributor (7) are provided. Distributor (7) receives compressed air from said air feed conduit, and being pivotally mounted at the center of said radial conduits (16), successively supplies each of them with compressed air. At the peripheral ends of said radial conduits (16) passages (20) are provided for a uniform distribution of the air through adjacent portions of the material. The use of said pneumatic device allows for a better sizing of the containers and facilitates unloading operations.

EP 0 098 248 A2

./...

FIG.2

MENCI S.p.A.

Pneumatic device for unloading pulverulent
or granular materials from containers.

The present invention refers to a pneumatic device for
unloading pulverulent materials (cement, flour, inert
powders, etc.) or granular materials (pellets, grains,
crushed stone, etc.) from containers or container cells,
either stationary or of the mobile type; that is, installed on trucks, trailers, freight cars and the like.

As is known, the extraction of polverulent or granular
materials from the above mentioned type of container is
carried out by blowing compressed air into it in order
to pressurize the container. The air is blown in through
special fixed distribution nozzles, usually located at
the bottom of the container. When the internal pressure
reaches a pre-set value, the unloading duct is opened
and the material comes out prevalently due to the difference in pressure between the inside and the outside and, secondarily, due to the drag force exercised by the compressed air itself.

The containers of the above mentioned type are generally cylindrical in form, with a truncated cone bottom which favors the flow of material toward the zone of extraction.

In order to avoid that some of the materials remains on the bottom, its section must not be greater than the area over which the compressed air works. This fact determines a sensible reduction in the overall useful volume of the container, with an equal area of the cylindrical portion and in relation to the total height. Further, it must be noted that the smaller the volume of the truncated cone section of the container, the greater is the level of its center of gravity with respect to the bottom; this has a negative influence on its stability at full load, especially if it is installed on a vehicle, which, to avoid the risk of turning over, must control their speed very carefully. For the above reasons, it seems clear that these problems are directly related to the system of compressed air immission on the bottom of the container during the unloading phase.

It is the object of the present invention a pneumatic device for unloading polverulent or granular materials from fixed or mobile containers capable of resolving the above mentioned problems by providing an efficient system of compressed air immission capable of working on successive portions of the bottom of the container until the entire area is covered; thus the most suitable dimension of the container can be selected, without taking into account the range of action of the air immission system, as is necessary when designing the containers of the known art.

According to the invention, therefore, a pneumatic device for unloading pulverulent or granular materials from fixed or mobile containers is provided, connected with the compressed air generator through a feed conduit which sends said compressed air toward the bottom of the container, and which moreover is provided with a valved outlet conduit  for unloading the material outside the container, characterized by the fact that it includes a plurality of fixed radial conduits on the bottom of said container and a compressed air distributor  unit located centrally with respect to said radial conduits and operatively connected to said air feed conduit, for successively connecting this last with each of said  radial conduits which, at their ends, are equipped with means for the distribution of the compressed air into the mass of material lying on said bottom, working on successive, adjacent portions thereof.   In one particularly advantageous embodiment of the invention, said radial conduits are inside a disc-shaped body located at the bottom of the con - tainer which also makes up the bottom of the container itself.   In particular, moreover, the distributor may be made to rotate with a suitable motor or by the action of the flow of the compressed air itself which presses on radial baffles   suitably set within said distribution unit.

The characteristics as well as the advantages of the pneumatic device according to the present invention will be clerer from the following description of preferred embodiments, described by way of example but in no way limiting, with reference to the attached drawings, in which:

figure 1 is a  schematic view of a container cell for pulverulent  or granular materials, on the bottom of which is installed the pneumatic device according to a first embodiment of the invention;

figure 2 shows a partial cross-sectional view of the pneumatic device as shown in figure 1;

figure 3 shows a partial plan view of the same device, along arrows III-III of figure 2;

figure 4 is a schematic view of a container cell for pulverulent or granular materials, on the bottom of which is installed the pneumatic device according to another embodiment of the invention;

figure 5 shows a top plan view of the bottom of said cell;

figure 6 illustrates cross-sectional view of said bottom, along arrows VI-VI of figure 5.

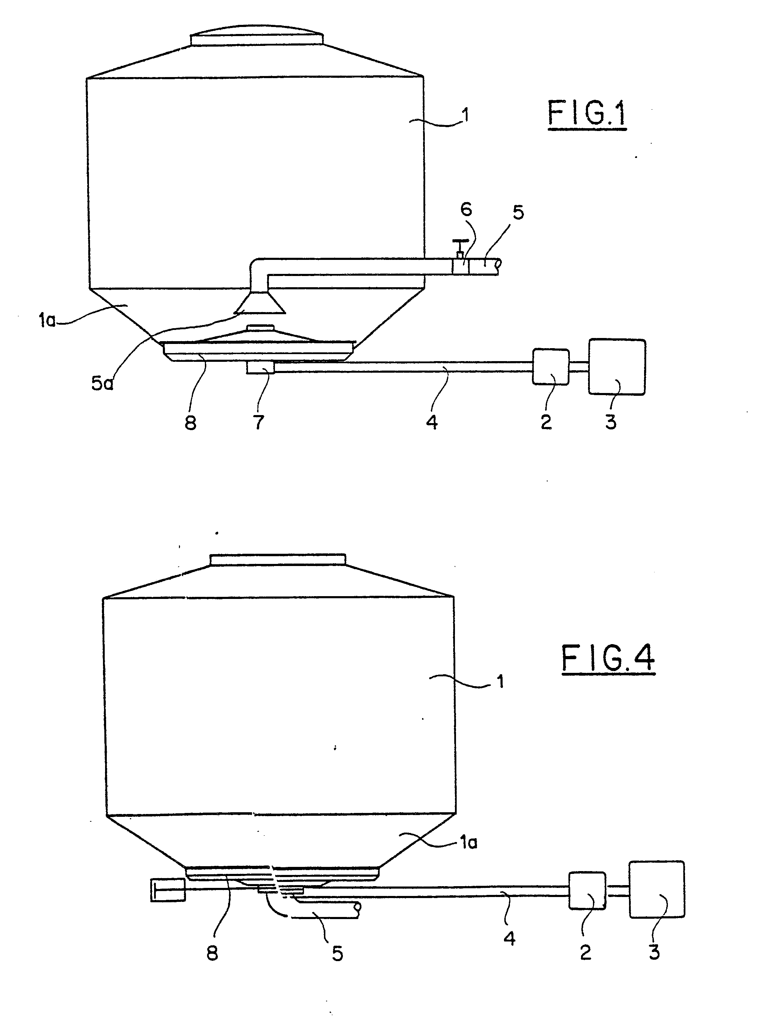

With reference to figure 1, the numeral 1 indicates a traditional container cell for loose pulverulent or granular materials, suitable for both fixed installation and for mobile installation on road or railway vehicles, and provided with a truncated-cone bottom 1a. The numeral 2 indicates an air compressor driven by a motor 3; 4 indicates a conduit for the compressed air from compressor 2 to the bottom of container 1. 5 indicates an outlet conduit for the material, provided with an interception valve 6 and a convergent inlet end 5a above the bottom of container 1. Container bottom substantially comprises two coaxial members; a centrally rotating air distributor 7 and a discoidal body 8 pivotally supporting said distributor 7 and extending around it, said body being fixed to container 1. The axis upon which the air distributor 7 rotates is essentially coincident with the vertical axis of symmetry of container 1.

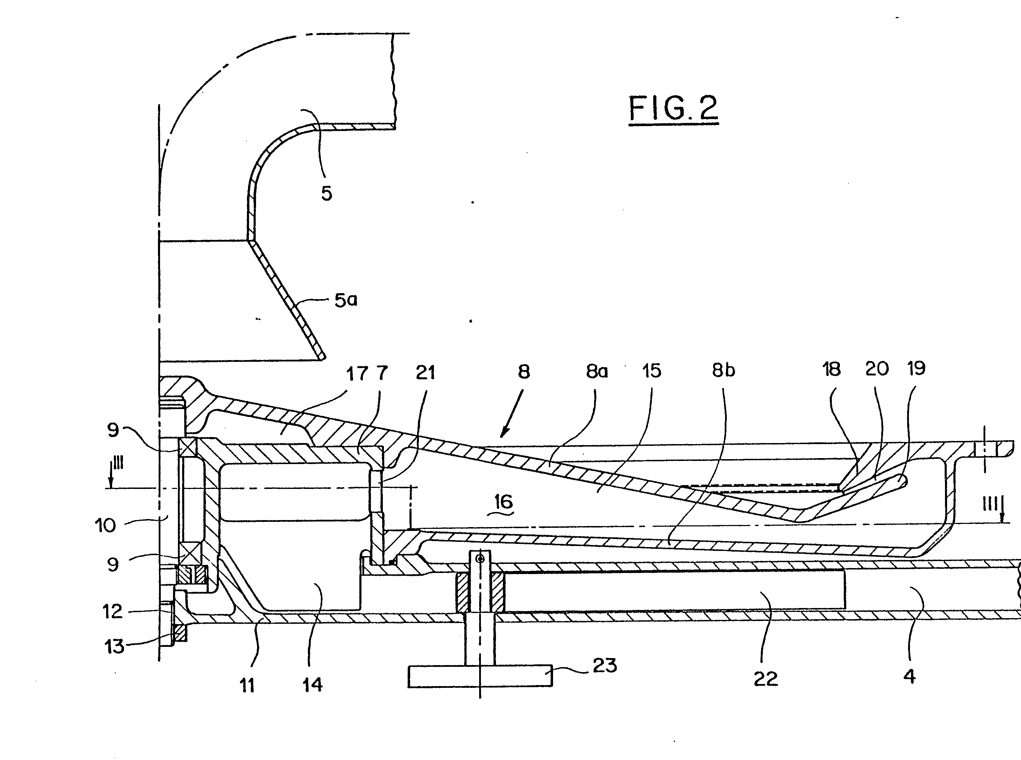

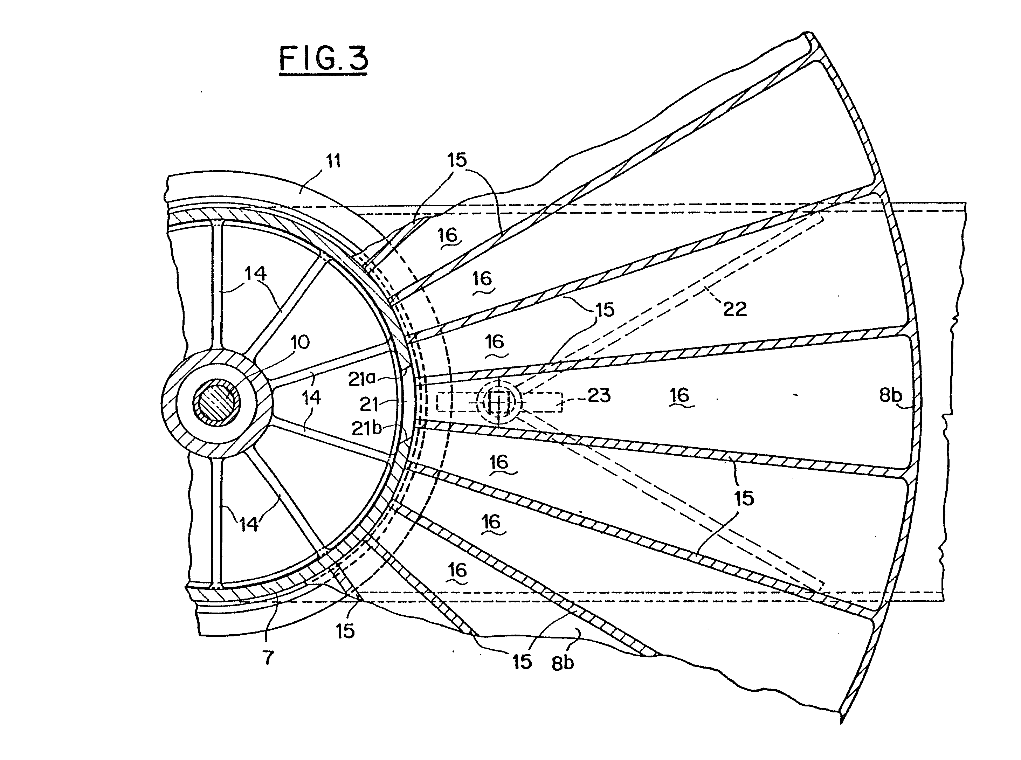

As is shown in greater detail in figures 2 and 3, both the distributor 7 and the discoidal body 8 are hollow.

In particular, distributor 7 is a ring-shaped unit with a substantially inverted - U - shaped cross section, the inner portion of said section being pivotally connected to a shaft 10 coaxial to container 1 through bearings 9. The lower part of distributor 7 is closed by a circular expansion 11 (shown in detail in the above mentioned figure 3) formed at the end of conduit 4 for the compressed air, provided with a central opening 12 for engaging a correspondent portion of shaft 10 to which it is secured with a lock ring 13. In this manner, air distributor 7 communicates with air compressor 2 through conduit 4. Distributor 7 is internally equipped with a plurality of equally spaced radial baffles 14, onto which the force of the compressed air coming ' from conduit 4 is applied: said force moves them continually and as a result determines the possibility of continuous rotation of distributor 7.

Discoidal body 8 is in its turn made up of two plates 8a and 8b, superimposed and spaced apart, which are concave with a different concavity but which in both cases is directed toward the bottom of the container. Upper plate 8a constitutes the proper bottom of container 1, on which the material contained therein lies, while lower plate 8b is ring-shaped with an internal diameter substantially equal to the external diameter of distributor 7. The two plates, 8a and 8b, are fixed together by means of a plurality of radial sectors 15 which define an equal number of radial conduits 16 between said plates.
Discoidal body 8 presents a central housing 17 which forms the seat of rotating air distributor 7 and onto which the entrances of the radial conduits 16 face. The peripheral edge of plate 8b is bent toward the interior of container 1 forming a continuous annular rim 18. Rim 18 is partially superimposed over a corresponding rim 19 formed at the periphery of plate 8a, a narrow passage 20 being defined between rims 18 and 19, which are inversely sloped with respect to plates 8a and 8b. Passage 20 is substantially faced toward the center of the bottom and put into communication radial conduits 16 with the interior of container 1. On the outside wall of the distributor 7, i.e. the one facing the entrances of the radial conduits 16, there is an opening 21 which, as the distributor rotates due to the action of the compressed air, comes to correspond with each said entrances so putting the radial conduits 16 into communication with the inside of the distributor 7.

The above description makes obvious the manner in which the rotating pneumatic device according to the present invention operates. In particular, it has to be noted the fact that the injection of air, distributed uniformly over the entire bottom surface of container 1, forms, when a pulverulent material is present therein, a mixture of air and said material, which, due to its density, lower than the one of the material alone, and the difference in pressure between the inside and the outside, favors a uniform unloading of the material through outlet conduit 5. Moreover, the larger surface of the bottom, which is possible thanks to the more efficient air injection, allows for a greater storage capacity with equal height of the truncated-cone section of the bottom and, consequently, also a lowering of the center of gravity of the container as a whole. And finally, it is to be noted that, in comparison with known pneumatic unloading devices, when using a compressor of the same power, a greater flowrate of unloaded material is obtained, with a consequent reduction in time required for the unloading operations.

According to a particularly advantageous embodiment of the presente invention, the two side edges (21a and 21b) of opening 21 are trimmed, that is, the shearing section of their thickness is inclined at a certain angle with respect to the radial orientation. Moreover, conduit 4 is
of quadrilateral section and is provided with an air
flow diverter 22 operated by means of crank 23, which
allows for directing the flow of air toward the right
or toward the left with respect to the axial direction
of the conduit itself. Thus the speed of rotation of
distributor 7, determined by the action of the flow of
air onto radial baffles 14 and by the reaction the same
provokes in sectors 15, can be varied as necessary,
given that said action and reaction of the air flow are
summed algebraically. In particular, with reference to
figure 3, if the flow is directed toward the left, so
provoking a clockwise rotation of distributor 7, the
reaction of the flow of air onto the sectors 15 will
provoke an increase in speed; if, instead, the flow is
directed toward the right, so determining a counterclockwise rotation of distributor 7, the reaction will cause a
slowdown of the movement of distributor 7. The possibility
of adjusting the rotation speed of the distributor improves
the operating adaptability of the device in the sense
that is is possible to select the most favourable working
conditions for the type of material to be unloaded. It
has been observed, for example, that low rotation rates
are more suited to granular materials, while with pulve-
rulent materials the best results are obtained when high
rates are used.

It is clear that, even if in the present description reference has been made exclusively to cylindrical container
cells whose bottom is in the form of a truncated cone,
the unloading device according to the present invention
may be advantageously applied to otherwise shaped containers
or to multiple type containers, made up of a single container structure, internally subdivised with sectors into
cells which may or may not be communicant, each of which
is provided with its own bottom for unloading purposes.

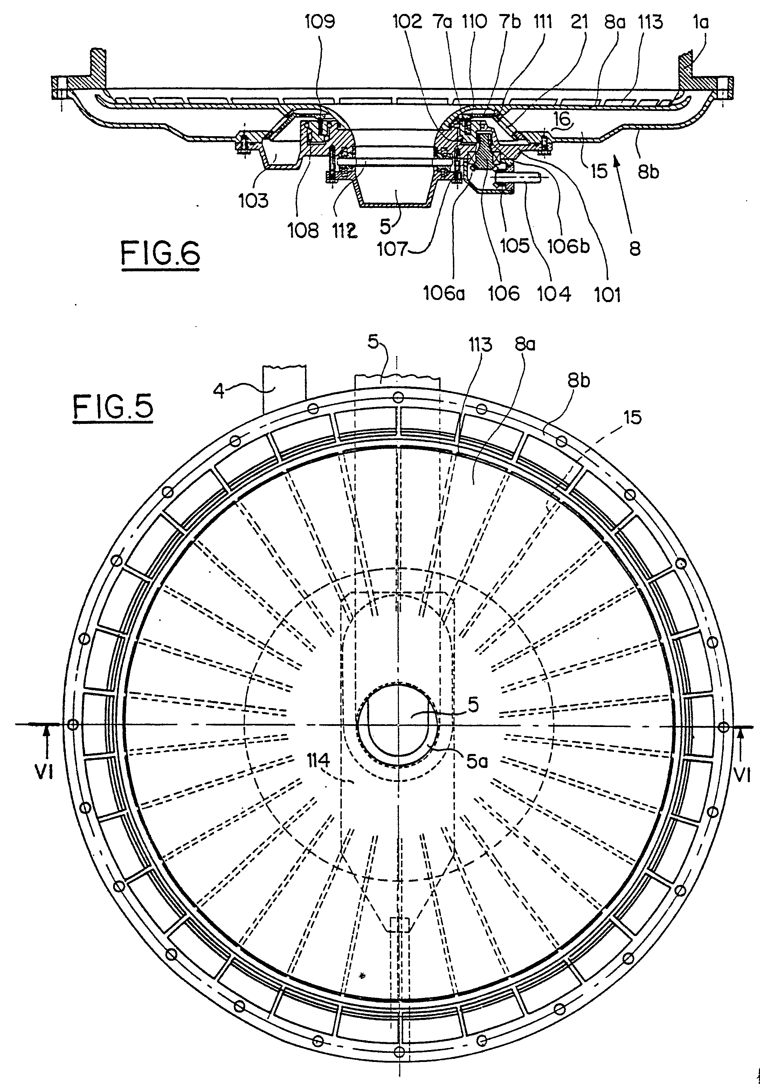

According to another embodiment of the invention illustrated in figures 4, 5 and 6, the air distributor 7 is rotated by means of a motor instead of by the air itself, while conduit 5 for unloading the pulverulent or granular material comes out from the bottom of container 1 and in particular from the center of the same, while distributor 7 rotates around inlet end of said conduit.

As is shown in detail in figures 5 and 6, likewise to the previously described embodiment of the invention, a discoidal body 8 made up of two superimposed, spaced plates 8a and 8b is provided; the upper one 8a makes up the inside of the bottom of container 1, while plate 8b forms the lower outside part of said bottom and is fixed to the side walls of container 1. Plates 8a and 8b are ring-shaped and, in particular, plate 8b carries a bracket 101 which is also substantially ring-shaped and concentric with plate 8b; the internal edge of bracket 101 is joined with the corresponding internal edge of plate 8a, thus defining the inlet end 5a of the discharge conduit 5. A plurality of radial sectors 15 delimit corresponding radial conduits 16 for the air, which are similarly provided between plates 8a and 8b.

Bracket 101 holds air distributor 7 which rotates with respect to the first on ball crown 102 and which forms the lower part of chamber 17 where distributor 7 rotates; the upper vault of said chamber is constituted by the internal face of the edge of plate 8a that delimits the inlet 5a of conduit 5. On bracket 101 there is also an eccentrically-placed inlet 103 which accomodates the compressed air conduit 4 and a housing 104 for the transmission from the motor (not shown) to the air distributor 7. To this end, the motor rotates a shaft 104, at the end of which a first conical gear 105 is keyed. Gear 105 operatively engages a toothed conical end 106a of a body 106 which rotates on bearings 107 in an opening 108 of bracket 101; the other end of body 106 carries a cylindrical toothing 106b which engages a corresponding cylindrical toothing formed on the lower part 7a of the distributor 7 which thus may be rotated with respect to bracket 101 on ball crown 102. The upper part 7b of distributor 7 is integral with the lower one by means of a plurality of alternated connecting pins 109 and springs 110 around inlet 5a. One side wall of upper part 7b of distributor 7 is mantained to sliding contact (due to the action of springs 110) with an anti-friction member 111, made of, for example, teflon, which is provided along the inlet openings of radial conduits 16. On said side wall an opening 21 is provided, which during the rotation of distributor 7 will put into communication, one after the other, each of radial conduits 16 with the compressed air circuit. All of the gaskets and seals between the various fixed and moving parts necessary to prevent air losses, infiltrations of oil and other materials, are foreseen in the device. They are shown quite clearly in figure 6 and are not described in detail.

Blockage of the unloading conduit 5 is obtained by means of a sliding gate 112 which is operated by a hydraulic jack (not shown) or, another, similar, means; sliding gate 112 is tight-mounted between the beginning of conduit 5 and bracket 101. The distribution of the compressed air into container 1 takes place in an analogous manner as previously described through passages or windows 113 formed on plate 8a, each of which corresponds to a respective radial conduit 16 and is oriented toward the center of container 1.

Further variations and modifications can be made to the pneumatic device for unloading pulverulent of granular materials from fixed or mobile containers, as described above and as illustrated without departing from the scope of the invention itself.

CLAIMS

1. Pneumatic device for unloading pulverulent or granular material from a stationary or mobile container, connected to a compressed air generator through an air feed conduit extending from said generator to the bottom of said container, and further provided with a valved outlet conduit for discharging the material outside the container, said device being characterized by the fact that it comprises a plurality of radial conduits (16) fixed at the bottom of said container and a compressed air distributor (7) centrally positioned with respect to said radial conduits (16) and operatively connected to said air feed conduit for successively connecting this last with each of said radial conduits (16), at the peripheral ends of said radial conduits means (18, 19, 20) being further provided for distributing the compressed air into the mass of material lying on said container bottom, working on successive adjacent portions thereof.

2. Pneumatic device according to claim 1, wherein said plurality of radial conduits (16) is formed inside a discoidal body (8) rigidly connected to said container and constituting the bottom thereof, having a central housing (17) in which said air compressed distributor (7) is pivotally located, said radial conduits (16) having their inlet ends facing onto said housing.

3. Pneumatic device according to the previous claims, wherein said discoidal body (8) is formed by two spaced apart, superimposed plates (8a, b) joined together by a plurality of radial sectors (15) delimiting said radial conduits (16), the lower one being annular shaped with internal radius substantially equal to the external radius of said air compressed distributor (7), air passages (20) being provided on the periphery of said discoidal body (8) and in correspondence with said radial conduits (16), facing towards the center of container bottom.

4. Pneumatic device according to claim 3, wherein peripheral edge of said lower plate (8b) is bent towards the interior of the container (1) to form a continuous annular rim (18) partially superimposed, in a spaced relation, over an annular rim (19) of upper plate (8a) thus defining said air passages (20) therebetween.

5. Pneumatic device according to the previous claims, wherein said compressed air distributor (7) is annular shaped and of substantially inverted - U - shaped cross section and has a wall faced to the inlet ends of said radial conduits (16) on which an opening (21) for putting each of them into successive communication with the compressed air feed conduit is provided.

6. Pneumatic device according to claim 5, wherein said air compressed distributor (7) is pivotally mounted on a shaft (10) perpendicular to the container bottom and supported by a fixed expansion (11) provided at the end of said air feed conduit, said expansion (11) forming the bottom of said air distributor (7).

7. Pneumatic device according to claim 6, wherein said air distributor (7) is pivotally mounted on a shaft (10) which is fixed with respect to said expansion (11) and is internally equipped with a plurality of equally spaced radial baffles (14) lying on the flow path of air coming from said air feed conduit, so that they can be continuously displaced by the air thus causing the rotation of said distributor (7).

8. Pneumatic device according to claim 7, wherein said compressed air feed conduit is equipped with an air flow diverter with respect to the axial direction of said air flow.

9. Pneumatic device according to claim 5, wherein the two side edges (21a, b) of said opening (21) are angularly trimmed with respect to the radial direction.

10. Pneumatic device according to claim 1, wherein said air distributor (7) is mounted for rotation around the inlet end (5a) of said material discharge conduit (5) coming out from the bottm of said container.

11. Pneumatic device according to claim 10, wherein said inlet end (5a) is formed by an internal edge of said upper plate (8a) and by the internal edge of an annular support carried by lower plate (8b) on which said distributor (8) is pivotally mounted.

0098248

FIG.1

FIG.4

FIG.2

0098248

FIG.3

0098248

FIG.6

FIG.5